(19) Europäisches Patentamt
European Patent Office
Office européen des brevets

(11) **EP 3 876 015 A1**

(12) **EUROPEAN PATENT APPLICATION**

(43) Date of publication:
08.09.2021 Bulletin 2021/36

(21) Application number: 21150877.5

(22) Date of filing: 11.01.2021

(51) Int Cl.:
*G02B 7/02* (2021.01)          *G02B 9/60* (2006.01)
*G02B 13/04* (2006.01)          *G02B 13/18* (2006.01)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 02.03.2020 JP 2020035217

(71) Applicant: **Ricoh Company, Ltd.**
Tokyo 143-8555 (JP)

(72) Inventor: **YOKOYAMA, Yukihisa**
Tokyo, 143-8555 (JP)

(74) Representative: **J A Kemp LLP**
**14 South Square**
**Gray's Inn**
**London WC1R 5JJ (GB)**

(54) **IMAGING OPTICAL SYSTEM, CAMERA APPARATUS, AND STEREO CAMERA APPARATUS**

(57)    An imaging optical system (1) consists of: an aperture stop (S); a first lens group (G1) closer to an object than the aperture stop (S); and a second lens group (G2) closer to an image than the aperture stop (S). The first lens group (G1) consists of: a first lens (L1) having a meniscus shape with negative power; and a second lens (L2) having a meniscus shape with positive power. The second lens group (G2) includes a third lens (L3) made of plastic and adjacent to the aperture stop (S).

The third lens (L3) has a surface that satisfies a formula below:

$$|c3a - c3b|/|c3a| > 1$$

where
c3a denotes a local curvature near an optical axis,
c3b denotes a local curvature at a height of an outermost end of an effective diameter of the third lens (L3).

## FIG. 1

**Description**

BACKGROUND

Technical Field

Embodiments of the present disclosure relate to an imaging optical system, a camera apparatus incorporating the imaging optical system, and a stereo camera incorporating the imaging optical system.

Related Art

Many camera apparatuses that include an imaging optical system and an area sensor, such as a monitoring camera for sensing and an on-vehicle camera to identify an object, are hitherto in practical use and demands for such camera apparatuses increase. Imaging optical systems that use plastic lenses reduced in cost and weight through quantity production are in practical use in recent years.

Plastic lenses, however, typically have a disadvantage of hardly having stable characteristics in a wide temperature range in accordance with the properties thereof.

Particularly in sensing cameras, the resolution might decrease due to such disadvantageous characteristics of plastic lenses when the temperature changes, which would cause deterioration in accuracy of identification of an object. If plastic lenses are applied to an on-vehicle camera for an advanced driver-assistance system (ADAS), for example, a serious accident might happen because of erroneous detection. In view of such a situation, a variation in focal point due to a change in an ambient temperature is to be optically reduced.

To achieve such an optical reduction in focal point, however, there is a need to simultaneously meet various demands according to the application, such as reducing the number of lenses for reduction in size and cost, reducing the degree of latitude in design due to a limited selection of plastic materials of heat resistance, increasing a diameter of aperture, obtaining a sufficient intensity of ambient light, correcting aberration such as distortion, and reducing a variation in angle of view due to a temperature change. In particular, reducing a variation in focal point due to a change in temperature to an extremely small value might be difficult.

JP-2014-089349-A and JP-2018-097150-A each disclose an optical system having a given configuration provided with a plastic lens whose variation of characteristics with temperature are reduced to approximately 25 micrometers ($\mu$m) in terms of 100°C. This reduced value fails to satisfy a desired reduced value of approximately several $\mu$m or less to achieve an intended accuracy of detection by an on-vehicle camera for sensing. In other words, the optical systems of JP-2014-089349-A and JP-2018-097150-A fail to compensate for a deterioration in resolution due to changes in temperature.

JP-2018-124358-A discloses an optical system whose variation of characteristics with temperature is reduced to approximately several $\mu$m, but whose number of lenses are many, which is disadvantageous in reduction in size and cost. Further, when the optical system is used for sensing, the optical system has large distortion, and hence electronic correction is presupposed. The performance of the optical system by itself is insufficient.

SUMMARY

In view of the above circumstances, it is an object of the disclosed technology to provide an imaging optical system incorporating a plastic lens, capable of compensating for a decrease in resolution with a change in ambient temperature while achieving high image quality.

In an aspect of this disclosure, there is provided an imaging optical system consisting of: an aperture stop; a first lens group closer to an object than the aperture stop; and a second lens group closer to an image than the aperture stop. The first lens group consists of: a first lens having a meniscus shape with negative power; and a second lens having a meniscus shape with positive power. The second lens group includes a third lens made of plastic and adjacent to the aperture stop. The third lens has a surface that satisfies a formula below:

$$|c3a - c3b|/|c3a| > 1$$

where

c3a denotes a local curvature near an optical axis,
c3b denotes a local curvature at a height of an outermost end of an effective diameter of the third lens.

In another aspect of this disclosure, there is provided a camera apparatus including the imaging optical system described above.

In still another aspect of this disclosure, there is provided a stereo camera including the imaging optical system described above.

The embodiments of the present disclosure provide an imaging optical system with a wide angle of view and a large diameter of aperture, produced at low cost, and capable of reducing or preventing a reduction in resolution due to a change in ambient temperature and achieving desired imaging performance with less distortion.

BRIEF DESCRIPTION OF THE SEVERAL VIEWS OF THE DRAWINGS

The aforementioned and other aspects, features, and advantages of the present disclosure would be better understood by reference to the following detailed description when considered in connection with the accompanying drawings, wherein:

FIG. 1 is a cross-sectional view of a lens configuration of an imaging optical system according to an embodiment of the present disclosure;

FIG. 2 is a table presenting data of respective optical surfaces of the imaging optical system according to an embodiment of the present disclosure;

FIG. 3 is a table presenting aspherical data of aspherical lenses of the imaging optical system according to an embodiment of the present disclosure;

FIG. 4 is a graph presenting a transition of curvature from an on-axis position to an off-axis position of an object-side surface of a third lens group in the imaging optical system according to an embodiment of the present disclosure;

FIG. 5 is a collection of aberration diagrams of spherical aberration, astigmatism, and distortion of the imaging optical system according to an embodiment of the present disclosure;

FIG. 6 is a graph presenting variations in spherical aberration with temperature changes in the imaging optical system according to an embodiment of the present disclosure;

FIG. 7 is a graph with a modulation transfer function (MTF) curve indicating variations in central image height with temperature changes in the imaging optical system according to an embodiment of the present disclosure;

FIG. 8 is a cross-sectional view of a lens configuration of an imaging optical system according to another embodiment of the present disclosure;

FIG. 9 is a table presenting data of respective optical surfaces of the imaging optical system according to another embodiment of the present disclosure;

FIG. 10 is a table presenting aspherical data of aspherical lenses of the imaging optical system according to another embodiment of the present disclosure;

FIG. 11 is a graph presenting a transition of curvature from an axial position to an off-axis position of an object-side surface of a third lens group in the imaging optical system according to another embodiment of the present disclosure;

FIG. 12 is a collection of aberration diagrams of spherical aberration, astigmatism, and distortion of the imaging optical system according to another embodiment of the present disclosure;

FIG. 13 is a graph presenting variations in spherical aberration with temperature changes in the imaging optical system according to another embodiment of the present disclosure;

FIG. 14 is a graph with an MTF curve indicating variations in central image height with temperature changes in the imaging optical system according to another embodiment of the present disclosure;

FIG. 15 is a cross-sectional view of a lens configuration of an imaging optical system according to still another embodiment of the present disclosure;

FIG. 16 is a table presenting data of respective optical surfaces of the imaging optical system according to still another embodiment of the present disclosure;

FIG. 17 is a table presenting aspherical data of aspherical lenses of the imaging optical system according to still another embodiment of the present disclosure;

FIG. 18 is a graph presenting a transition of curvature from an axial position to an off-axis position of an object-side surface of a third lens group in the imaging optical system according to still another embodiment of the present disclosure;

FIG. 19 is a collection of aberration diagrams of spherical aberration, astigmatism, and distortion of the imaging optical system according to still another embodiment of the present disclosure;

FIG. 20 is a graph presenting variations in spherical aberration with temperature changes in the imaging optical system according to still another embodiment of the present disclosure;

FIG. 21 is a graph with an MTF curve indicating variations in central image height with temperature changes in the imaging optical system according to still another embodiment of the present disclosure;

FIGs. 22A, 22B, 22C, and 22D are graphs presenting a transition of curvature from an axial position to an off-axis position of a first surface in the imaging optical system according to embodiments of the present disclosure;

FIG. 23A is an illustration of formation of image at a sensor surface, a spherical aberration curve, and an MTF curve in a room temperature environment;

FIG. 23B is an illustration of formation of image at the sensor surface, a spherical aberration curve, and an MTF curve with respect to the defocusing direction when temperature changes, according to a comparative example;

FIG. 23C is an illustration of formation of image at the sensor surface, a spherical aberration curve, and an MTF curve with respect to the defocusing direction when temperature changes, according to an embodiment of the present disclosure.

FIG. 24A is an illustration of a variation of spherical aberration in a direction to be under-corrected;

FIG. 24B is an illustration of a variation of spherical aberration in a direction to be over-corrected;

FIG. 25 is a diagram illustrating an example of a structure in which lenses are fit and held together;

FIGs. 26A and 26B each are illustrations of a configuration of a camera apparatus incorporating the imaging optical system according to an embodiment;

FIG. 27 is a hardware block diagram of the camera incorporating the imaging optical system according to an embodiment; and

FIG. 28 is an illustration of a configuration of a stereo camera incorporating the imaging optical system according to an embodiment of the present disclosure.

The accompanying drawings are intended to depict embodiments of the present disclosure and should not be interpreted to limit the scope thereof. The accompanying drawings are not to be considered as drawn to scale unless explicitly noted.

DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner and achieve similar results.

Although the embodiments are described with technical limitations with reference to the attached drawings, such description is not intended to limit the scope of the disclosure and all of the components or elements described in the embodiments of this disclosure are not necessarily indispensable.

Referring now to the drawings, embodiments of the present disclosure are described below. In the drawings for explaining the following embodiments, the same reference codes are allocated to elements (members or components) having the same function or shape and redundant descriptions thereof are omitted below.

The aforementioned and other aspects, features, and advantages of the present disclosure would be better understood by reference to the following detailed description when considered in connection with the accompanying drawings, wherein: With reference to the drawing, a description is provided of a printer as an example of an electrophotographic image forming apparatus, according to an illustrative embodiment of the present disclosure.

Embodiments of an imaging optical system according to at least one embodiment of the present disclosure is described below with reference to the drawings.

The imaging optical system according to an embodiment is applicable in, for example, a monocular camera for sensing, such as a monitoring camera or an on-vehicle camera, or a pantoscopic camera such as a stereo camera. Such an imaging optical system features as follows. The purpose of use of the imaging optical system according to at least one embodiment is not limited to sensing. The imaging optical system may be used as, for example, an imaging optical system for a digital camera used for taking a still-image or a movie, or an imaging optical system for a film camera using a silver-salt film. In the following description of the embodiments of the present disclosure, a direction from the object side toward the image side is defined as a positive direction, a direction from the image side toward the object side is defined as a negative direction.

Demands for camera apparatuses increase, including a higher resolution, a wider angle of view, a larger diameter of aperture, and a reduction in weight and cost, an increase in angle of view, an increase in diameter of aperture, and a reduction in cost. It is requested to develop camera apparatuses that satisfy the demands.

Furthermore, there are also demands for that a sensing camera apparatus has high resolution to allow identification of a relatively small object or observation of a relatively far situation, has a wide angle of view to allow sensing of a wide range, has a large diameter of aperture to allow proper imaging and recognition even in a dark environment such as during night, is compact and lightweight to increase the latitude in installation, and provides these values at low costs.

Further, a demand of low distortion also increases to reduce an influence on a measurement error or to reduce a burden of electronic image correction. Optical design that satisfies the demands is requested.

In addition, functional stability in various use environments is also requested. It is also requested to reduce a variation in resolution with a change in temperature environment in view of optical design.

In general, when the angle of view is increased, in particular, distortion is likely increased in addition to coma aberration, astigmatism, and field curvature. When the diameter of aperture is increased, in particular, spherical aberration is likely increased in addition to coma aberration. To correct such aberrations, the optical system tends to increase in size and cost. The imaging optical system according to at least one embodiment employs the following basic configuration, thereby attaining an increase in angle of view and an increase in diameter of aperture while reducing aberrations.

In at least one embodiment, a first lens group G1 disposed closer than an aperture stop S to an object to be observed consists of a first lens L1 and a second lens L2. The first lens L1 has a meniscus shape having negative power. The second lens L2 has a meniscus shape having positive power.

The negative power of the first lens L1 enables an increase in angle of view, and the meniscus shape of the first lens L1 serves to reduce various off-axis aberrations, particularly astigmatism that likely occur due to increased negative power to obtain wider angle of view. The positive power of the second lens L2 balances distortion within the first lens group G1, and the meniscus shape of the second lens L2 reduces the Petzval sum to reduce curvature of field.

A second lens group G2 disposed closer than the aperture stop S to an image to be formed corrects various aberrations that have not been completely corrected by the first lens group G1. The second lens group G2 has positive power larger than the power of the first lens group G1 to achieve desired imaging performance over the entirety of the optical system.

This arrangement enables a relatively wide angle of view and a relatively large diameter of aperture while achieving desired imaging performance with low distortion.

In this case, the above-described configuration or a portion of the configuration employs a plastic lens. Plastic lenses are typically more advantageous than glass lenses in low cost and light weight. However, plastic lenses may not have stable characteristics in a wide temperature range.

Plastic lenses have relatively larger coefficients of linear expansion and temperature coefficients of refractive indices than those of glass lenses, and hence the plastic lenses have large changes in RDN (radius of curvature, surface distance, refractive index) in an environment with a temperature change, and performance thereof is likely deteriorated.

In particular, for a camera for sensing, if the focal point largely varies due to a change in RDN, resolution might deteriorate, causing sensing measurement accuracy to be deteriorated.

To reduce variations in the focal points of plastic lenses, in typical manners, the power of the plastic lenses are reduced to extremely low values, or directions in which the focal points of other lenses vary are reversed to cancel out the variation in the focal points of the plastic lenses.

However, it might be difficult in terms of structure to simultaneously achieve various demands as described above while reducing a variation in focal position, and the focal position might be displaced from a target image plane (e.g., a photo-sensing surface of a camera sensor, which is referred to simply as a sensor surface) due to a change in temperature.

To deal with such issues, in the embodiments of the present disclosure, in addition to the above-described configuration, a third lens L3 included in the second lens group G2 and adjacent to the aperture stop uses a plastic lens to achieve reduction in cost and weight. In addition, when c3a denotes a local curvature near the optical axis (hereinafter, referred to simply as an axial position) of the third lens L3, and c3b denotes a local curvature at a lens height corresponding to the outermost end of the effective diameter (hereinafter, referred to simply as an off-axis position) of the third lens L3, a first surface of the third lens L3 satisfies Formula (1) below:

$$|c3a - c3b|/|c3a| > 1 \quad ... (1)$$

This configuration can reduce a deterioration in resolution while allowing the focal point to be varied.

The following describes the local curvature. In the aspherical shape, when displacement X in the optical axis direction is defined by Formula (2) below,

$$X = \frac{(H^2/R)}{1+\sqrt{1-(1+k)(H/R)^2}} + \sum A_i \cdot H^i \quad ... (2)$$

local curvature c at a given lens height is typically defined by Formula (3) below.

$$c = \frac{X''}{(1 + X'^2)^{3/2}} \quad ... (3)$$

In these Formulae, H is a lens height from the optical axis with respect to a surface vertex, R is a radius of curvature at the surface vertex, k is a conical constant, Ai is an aspherical coefficient with respect to an order i, X' is an amount obtained by differentiating the displacement X in the optical-axis direction with respect to the lens height H by first-order derivation, and X" is an amount obtained by differentiating the displacement X in the optical-axis direction with respect to the lens height H by second-order derivation. At any surface on the object side and the image side, c is positive in the case of a convex surface shape facing the object side and c is negative in the case of a concave surface shape facing the object side.

In other words, when c of the object-side surface is positive, the object-side surface has positive power. When c of the image-side surface is positive, the image-side surface has negative power.

Formula (1) represents that c3a - c3b, which is a variation in curvature from the axial position to the off-axis position, is larger than c3a, which is the local curvature at the axial position.

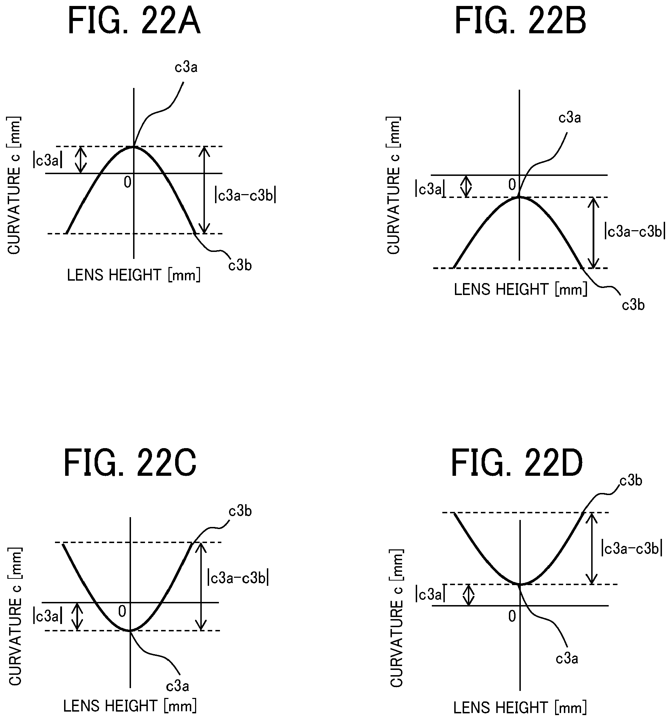

FIGs. 22A to 22D each represent a transition of curvature from the axial position to the off-axis position of the first surface, according to an embodiment.

The shape of the curvature distribution is not limited to these examples, and may swell to have a plurality of extreme values, for example.

As described above, since plastic lenses have relatively larger coefficients of linear expansion and temperature coefficients of refractive indices than those of glass lenses, for example, in a high temperature environment, the curvature and refractive index of a plastic lens markedly decrease, and either of positive and negative powers is weakened.

The embodiments of the present disclosure enable control of a variation between axial power and off-axis power due to a temperature change, and reduces a deterioration in resolution while allowing a variation in focal point.

Note that the focal point refers to a position at which paraxial rays form an image.

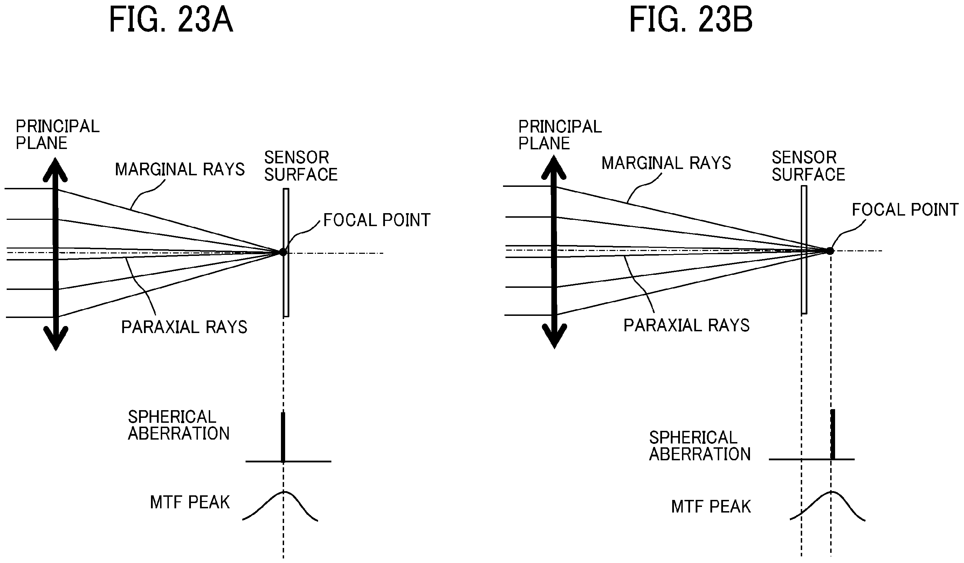

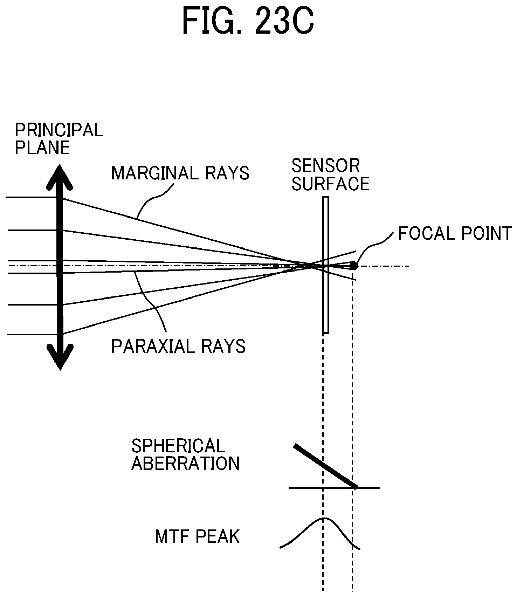

FIG. 23A is an illustration of formation of image at a sensor surface, a spherical aberration curve, and an MTF curve with respect to a defocusing direction (i.e., the axial direction) in a room temperature environment. FIG. 23B is an illustration of formation of image at the sensor surface, a spherical aberration curve, and an MTF curve with respect to the defocusing direction when a temperature changes, according to a comparative example. FIG. 23C is an illustration of formation of image at the sensor surface, a spherical aberration curve, and an MTF curve with respect to the defocusing direction when a temperature changes, according to an embodiment of the present disclosure. The paraxial rays refer to rays passing near the center of the exit pupil, and the focusing point of the paraxial rays is synonymous with the above-described focal point. The marginal rays refer to rays passing the outermost edge of the exit pupil, and the difference in focusing point between the marginal rays and the paraxial rays causes spherical aberration.

Further, resolution is highest at the peak of the MTF curve (hereinafter, also simply referred to as the peak or MTF peak). The following describes cases where the focal positions as illustrated in FIGs. 23A to 23C are displaced in the positive direction relative to the sensor surface at high temperatures.

In a room temperature environment as illustrated FIG. 23A, the rays incident on the object side of the optical system pass through the optical system and successfully form an image on the sensor surface, achieving high resolution.

In a high temperature environment as illustrated in FIG. 23B according to a comparative example, however, when a variation in focal point is not reduced, and the focal point is significantly displaced in the positive direction, the spherical aberration is maintained well, but the MTF peak is displaced from the sensor surface, causing a deterioration in resolution.

To avoid such situations, according to an embodiment of the present disclosure, a plastic lens is disposed adjacent to the aperture stop, having a surface whose curvature significantly changes between an axial position and an off-axis position to satisfy Formula (1).

In the case of FIG. 23C, the first surface has significant negative power over a range from the axial position to the off-axis of the first surface (which corresponds to FIGs. 22A and 22B), which enables the focusing point of the marginal rays to be shifted in the negative direction relative to the focusing point of the paraxial rays due to a decrease in significant negative power at the off-axis position in a high temperature environment.

In other words, spherical aberration varies to be under-corrected in a high temperature environment. Since the MTF peak is closer to the object than (i.e., displaced in the negative direction relative to) the focal point along the spherical aberration, even when the focal point is displaced in the positive direction relative to the sensor surface, the MTF peak can be close to the sensor surface.

In a low temperature environment, the opposite directional phenomenon of the high temperature environment occurs: the spherical aberration varies to be over-corrected due to an increase in negative power at the off-axis position, which enables the MTF peak to be close to the sensor surface even when the focal point is displaced in the negative direction opposite to that of the high temperature environment.

Alternatively, in the high temperature environment, an optical system, whose focal point is displaced from the sensor surface in the negative direction opposite to those of FIGs. 23A to 23C, is designed to have a first surface having strong positive power over a range from the axial position to the off-axis position of the first surface (which corresponds to FIGs. 22C and 22D) to satisfy Formula (1). This configuration exhibits the same advantageous effect.

In this case, since the spherical aberration varies to be over-corrected due to a decrease in significant positive power at the off-axis position in the high temperature environment, even when the focal point is displaced in the negative direction from the sensor surface, the MTF peak can be close to the sensor surface.

In the present disclosure, when a variation in the focal point of the marginal rays is greater than a variation in the focal point of the paraxial rays in the negative direction, such a variation is called a variation of spherical aberration in a direction to be under-corrected. When a variation in the focal point of the marginal rays is greater than a variation in the focal point of the paraxial rays in the positive direction, such a variation is called a variation of spherical aberration in a direction to be over-corrected.

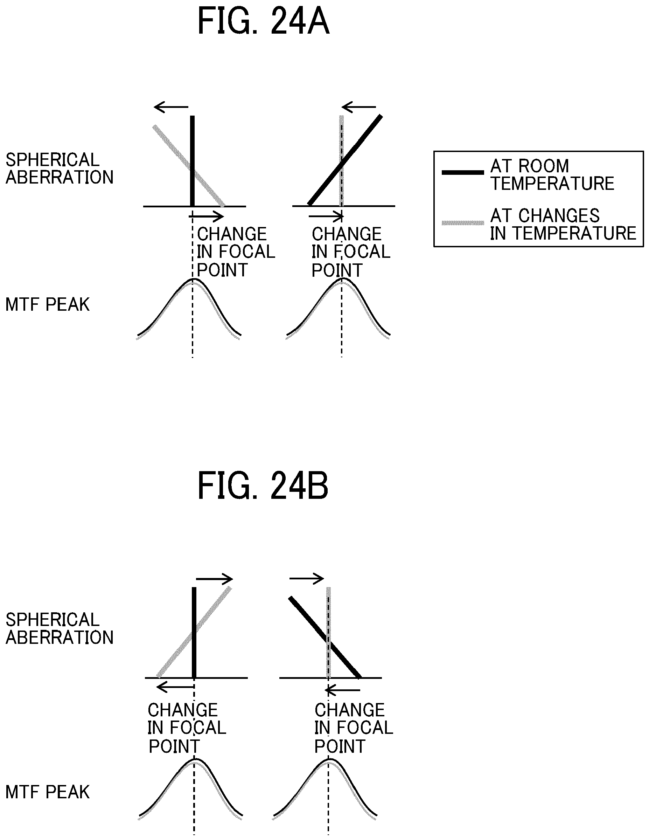

FIG. 24A is an illustration of a variation of spherical aberration in a direction to be under-corrected, and FIG. 24B is an illustration of a variation of spherical aberration in a direction to be over-corrected. As illustrated in FIGs. 24A and 24B, the spherical aberration generated in the room temperature environment may be corrected using the variation that occurs when a temperature changes. This also enables the MTF peak to be at a desired position.

With the configuration as described above, the imaging optical system according to an embodiment has a wide angle of view and a large diameter of aperture while achieving intended imaging performance with low distortion. Further, the imaging optical system includes a third lens having a surface that contributes to a variation in focal point more than to a variation in spherical aberration, and satisfies Formula (1). This configuration allows the spherical aberration to vary with a temperature on purpose, which prevents a deterioration in resolution even when the focal point changes.

In the above-described embodiments, the third lens is assumed to be made of plastic having a relatively large coefficient of linear expansion and temperature coefficient of refractive index. In some embodiments, however, the third lens may be made of glass material other than plastics, having the following characteristics, and such a lens also employs the same embodiments and exhibits the same advantageous effects as those of the plastic third lens as described above: when $\alpha 3$ denotes the coefficient of linear expansion of the third lens, Formula (4) below is satisfied:

$$\alpha 3 > 30 \times 10^{-6} \ ... \ (4)$$

Alternatively, when $\beta 3$ denotes the temperature coefficient of refractive index of the third lens, Formula (5) is satisfied:

$$\beta 3 < -50 \times 10^{\wedge}\text{-}6 \ ... \ (5)$$

The temperature coefficient of refractive index is a value of the temperature coefficient of refractive index with respect to the d-line in air at temperatures of 20°C to 40°C.

In the present disclosure, the difference in curvature between the axial position and the off-axis position of the surface is used to cause aberration to vary.

Comparing a case where the axial curvature c3a and the off-axis curvature c3b have the same sign with a case where the on-axis curvature c3a and the off-axis curvature c3b have different signs while the difference between the axial curvature and the off-axis curvatures is the same (for example, FIGs. 22A and 22B), the absolute value of c3b is to be larger for the case of the same sign, which is disadvantageous in terms of the sensitivity to aberrations other than spherical aberration and errors such as decentering, and formability.

In view of this, Formula (6) below is satisfied so that c3a and c3b have different signs.

$$c3a/c3b < 0 \ ... \ (6)$$

If Formula (6) is not satisfied, the off-axis curvature is to be made large, and power increases, which is disadvantageous in terms of increasing aberrations other than spherical aberration due to the increased power, the sensitivity to errors such as decentering, and formability.

Further, as described above, the focal point might be displaced in the positive direction or the negative direction in the high temperature environment. The embodiments of the present disclosure are applicable in both cases of displacement in the positive direction and displacement in the negative direction).

However, since the imaging optical system as a whole according to an embodiment has positive power to achieve intended imaging capability, the positive power of the imaging optical system as a whole decreases, and the focal point tends to be displaced in the positive direction in the high temperature environment.

In this case, the spherical aberration is preferably caused to vary in the direction to be under-corrected. To achieve such a variation in spherical aberration, the first surface is preferably designed to have positive power at the axial position and negative power at the off-axis position.

The imaging optical system according to an embodiment has a configuration that satisfies Formula (1), and more preferably satisfies Formula (7) below where c3a and c3b have different signs, which is more effective.

$$|c3a| < |c3b| \ ... \ (7)$$

If the absolute value of c3b is equal to or less than the absolute value of c3a, the variation in image-forming position of the paraxial rays and spherical aberration would cancel out the variation in MTF peak, which is, however, merely a self-correction of the variation in focal point caused by the first surface, under the action of the first surface itself.

To correct a variation in focal position due to changes in the curvatures of the first surface and other surfaces, Formula (7) is satisfied so as to enable the first surface to exert higher correction capability.

Satisfying Formula (7) increases the amount of variation in the focusing point of the marginal rays to be larger than the amount of variation in the focusing point of the paraxial rays in the opposite direction of the focusing point of the marginal rays. This enables the MTF peak to be shifted by a larger amount than a variation in focal point in the opposite direction of the MTF peak, under the action of the first surface.

In the imaging optical system according to an embodiment, the third lens L3 having such a first surface is adjacent to the aperture stop to enable light rays traveling to reach the respective image heights to obtain desired power while passing through the first surface, before being separated. This enables an effective control of a variation in spherical aberration.

In other words, the first surface is preferably disposed to be physically closest to the aperture stop among all the optical surfaces of the optical system.

The first surface is closest to the aperture stop among the surfaces forming the third lens L3. In addition, the third lens L3 is disposed closer to the aperture stop S than a second lens L2 to satisfy Formula (8) where d2 denotes a distance between the second lens L2 and the aperture stop S, and d3 denotes a distance between the third lens L3 and the aperture stop S, which is more effective.

$$d2 > d3 \ ... \ (8)$$

If Formula (8) is not satisfied, the light rays traveling toward the respective image heights would be separated from each other, and the first surface would fail to exert its shape effect for controlling the spherical aberration, over the entirety of the image height uniformly. This might cause the amount of variation in MTF peak due to a temperature change to vary depending on each image height, and as a result, the resolution deteriorates at some image heights.

Further, the imaging optical system according to an embodiment preferably satisfies Formula (9) below where φA denotes power of the entirety of the optical system:

$$|c3a/\varphi A| < 1 \ ... \ (9)$$

In this case, as c3a increases, the variation in image-forming position of the paraxial rays of the first surface itself increases. Increasing a variation in spherical aberration when a temperature changes can control a variation in the MTF peak, but might reduce the height of the MTF peak, causing a deterioration in resolution.

However, satisfying Formula (9) can minimize the imaging performance of the first surface onto the sensor surface, with respect to the power of the optical system as a whole, and enables a variation in curvature between the axial position and the off-axis position to be set to achieve the intended performance according to an embodiment of the present disclosure.

It is to be noted that an on-vehicle camera apparatus needs to assure high performance even in severe environments, and hence a first lens that is disposed closest to the object side of the camera apparatus and is likely affected by a use environment desirably use a glass lens formed of glass.

Since the first lens is the glass lens, an imaging lens that is weather resistant and hardly broken can be provided.

The embodiments of the present disclosure are applicable to reducing a variation in MTF peak to a minute value of less than about several $\mu$m after optically reducing a variation in focal point to some extent.

To reduce a variation in focal point to some extent, a plastic lens that causes a variation in focal point in the opposite direction of that of the third lens L3 is used to cancel out such a variation in focal point effectively.

In addition to the third lens L3 having the first surface, a fourth lens L4 formed of such a plastic lens is desirably disposed within the second lens group G2.

The fourth lens L4 that is not adjacent to the aperture stop S and is formed of a plastic lens causes the light rays traveling toward the respective image heights to be separated from each other through the fourth lens L4, and simultaneously enables correction of aberrations that has not been controlled by the third lens L3 through which the light rays are not separated from each other.

Further, it is desirable that the plastic areas of the third lens L3 and the fourth lens L4, which are made of plastic, are fit and held together outside the effective diameters of the third lens L3 and the fourth lens L4.

In the imaging optical system according to an embodiment, since the first surface of the third lens L3 has power that significantly changes between the axial position and the off-axial position, the sensitivity to the lens decentering created during manufacturing likely increases and deteriorates.

To deal with such an issue, the imaging optical system according to an embodiment is designed to cancel out a variation in aberration using the decentering of the fourth lens L4, and the third lens L3 and the fourth lens L4 are fit into each other to simultaneously create decentering of the lenses (i.e., a group decentering).

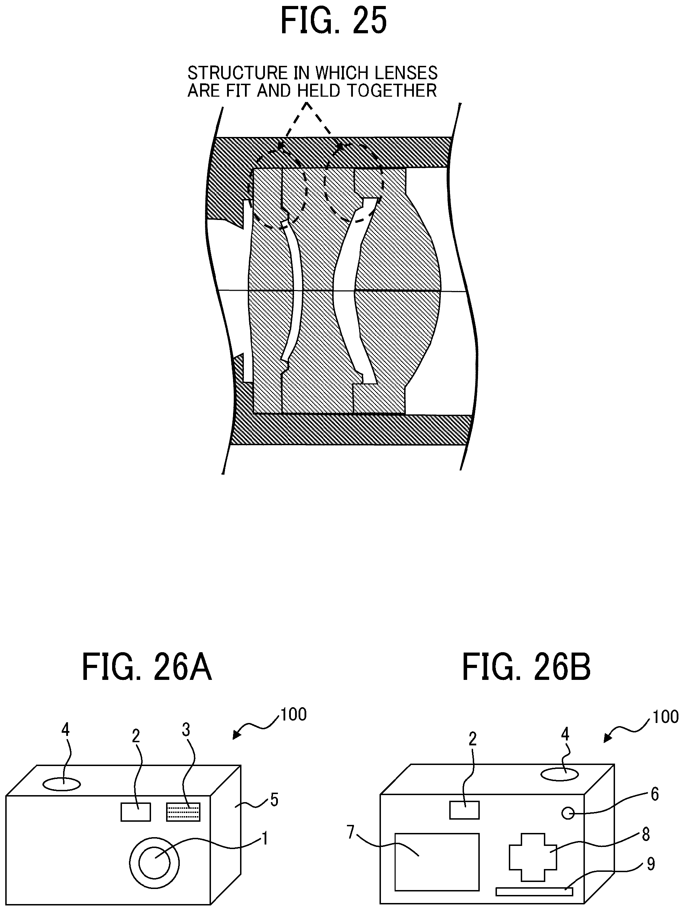

Further, plastic lenses are more easily molded in a complicated structure than glass lenses in terms of the manufacturing process, and the plastic lenses are easily formed to be fit and held together as illustrated in the example of FIG. 25. The shape of the structure in which plastic lenses are fit and held together is not limited to the configuration in FIG. 25.

The following describes in detailed specific examples according to an embodiment of the present disclosure described above. The first example to the third example present specific configurations of the imaging optical system according to an embodiment of the present disclosure.

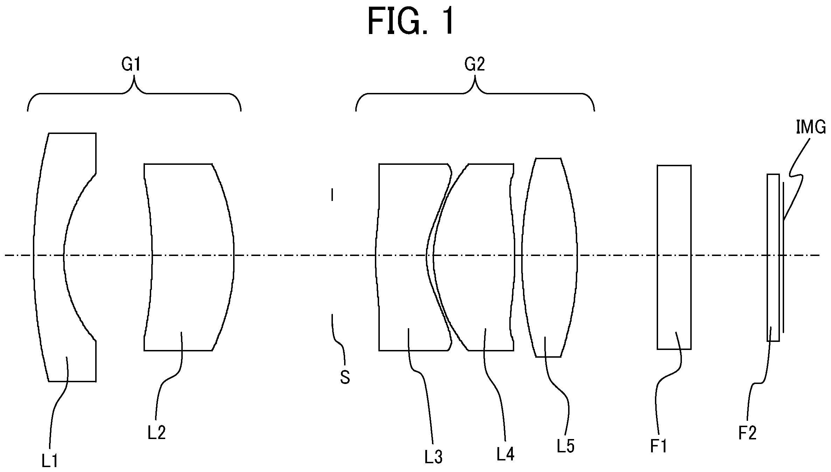

FIGs. 1 to 7 are illustrations of an imaging optical system according to the first example.

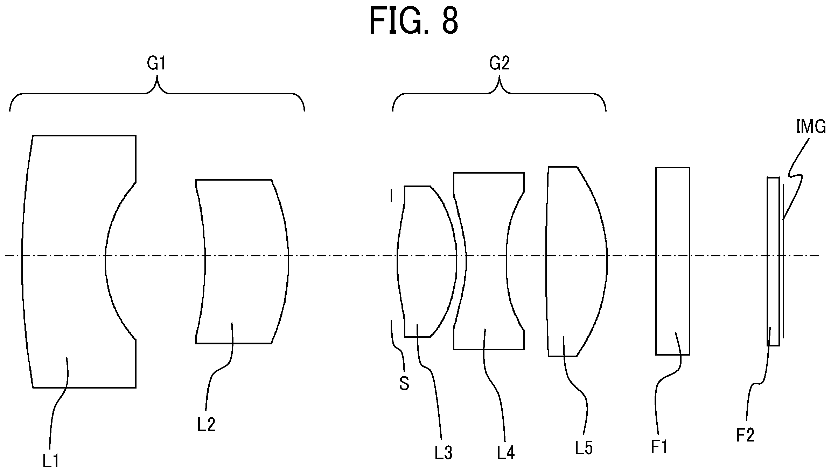

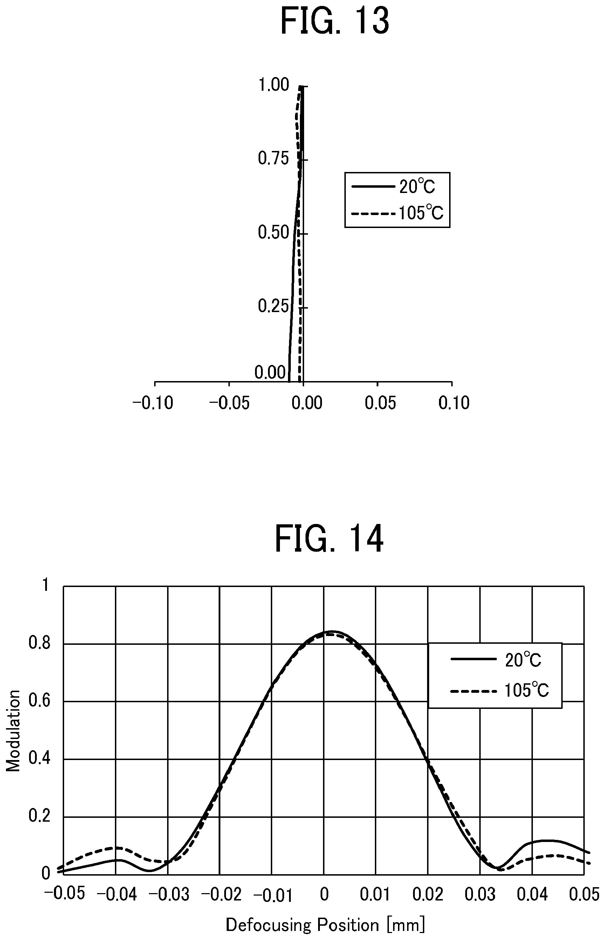

FIGs. 8 to 14 are illustrations of an imaging optical system according to the second example.

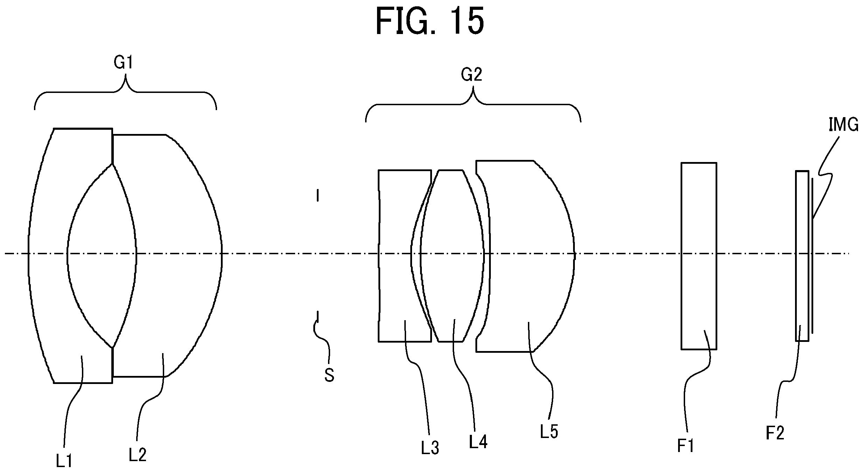

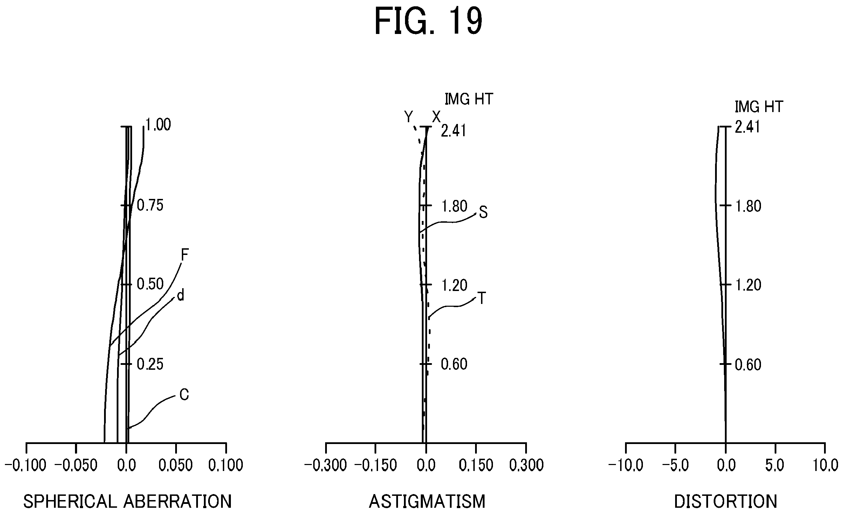

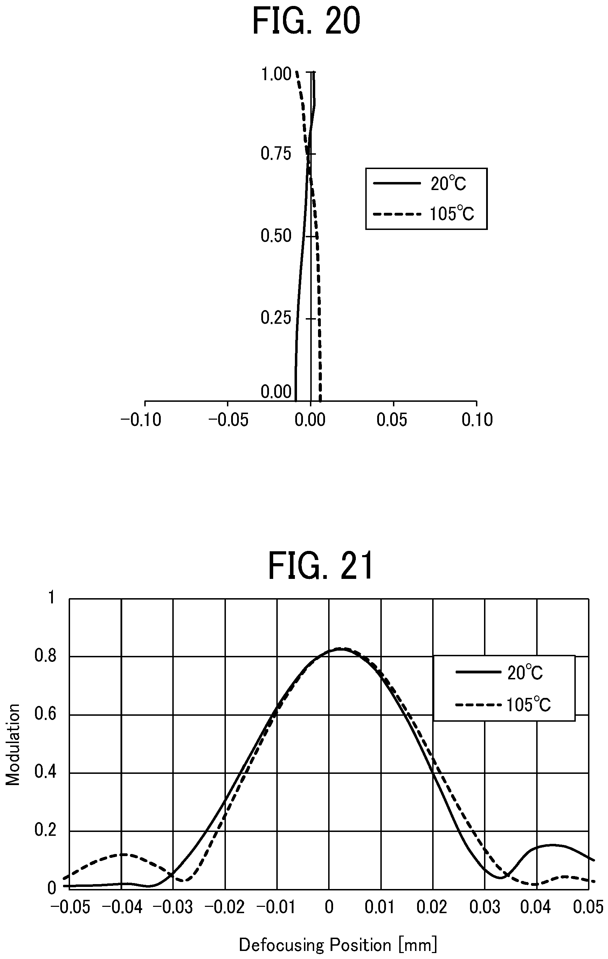

FIGs. 15 to 21 are illustrations of an imaging optical system according to the third example.

The reference numbers in FIGs. 1 to 21 are used in common through the examples to avoid complicated explanation of the examples due to an increase in the number of digits of the reference numbers.

The meanings of the symbols used in common through the examples are as follows:

> f: focal length of the optical system as a whole
> Fno: open F-number
> $\theta$: half angle of view
> Y: maximum image height
> r: radius of curvature
> d: surface distance
> Nd: refractive index
> vd: Abbe number
> Apt: optical effective diameter

FIG. 1 is a cross-sectional view of an imaging optical system according to the first example of an embodiment of the present disclosure.

As illustrated in FIG. 1, the imaging optical system according to the first example of an embodiment consists of, sequentially from the object side toward the image-plane side, a first lens group G1, an aperture stop S, and a second lens group G2. The first lens group G1 consists of, sequentially from the object side toward the image-plane side, a lens L1 and a lens L2, and the second lens group G2 consists of, sequentially from the object side toward the image-plane side, a lens L3, a lens L4, and a lens L5.

More specifically, the lens L1 has a meniscus shape with a convex surface facing the object side, having negative power. The lens L2 has a meniscus shape with a concave surface facing the object side, having positive power. The lens L3 has a meniscus shape with a convex surface facing the object side, having negative power. The lens L4 has a biconvex shape having positive power, and the lens L5 has a biconvex shape having positive power.

Further, the object-side surface of the lens L3 adjacent to the aperture stop S has positive power at the axial position and negative power at the off-axis position.

In the first example, the lens L1 is a glass lens, and the lens L2 is a glass lens. The lens L3 is a plastic lens, and the lens L4 is a plastic lens. The lens L5 is a glass lens. In the embodiments of the present disclosure, a first lens corresponds to the lens L1, and a second lens corresponds to the lens L2. Further, the third lens corresponds to the lens L3, and a fourth lens corresponds to the lens L4.

In the first example, the focal length f of the optical system as a whole is 4.29 millimeters (mm), and the open F-number Fno is 1.90. The half angle of view θ is 29.2 degrees, and the maximum image height Y is 2.4 (mm).

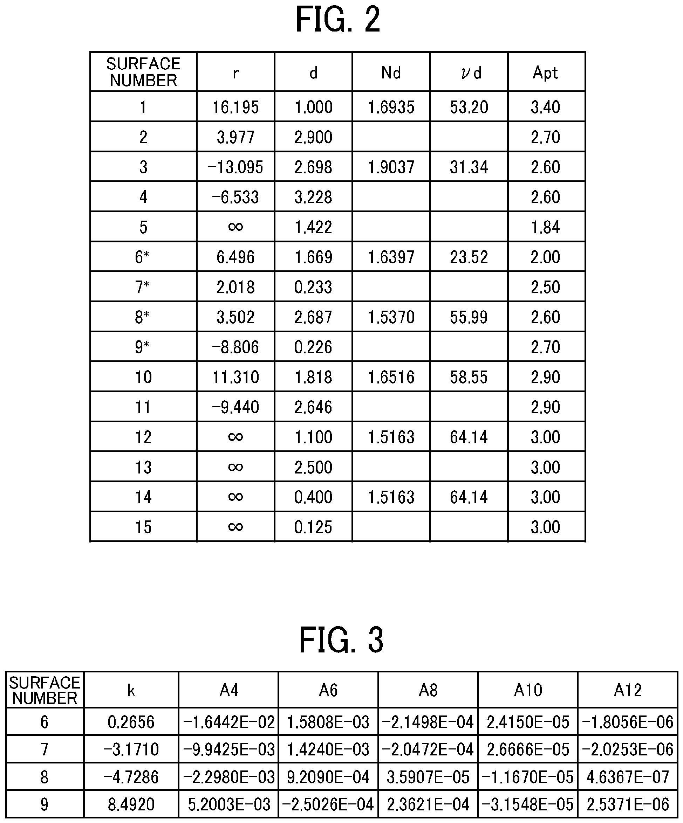

The table in FIG. 2 lists data for the surface distance d of adjacent optical surfaces, the refractive index Nd, the Abbe number vd, and the optical effective diameter Apt of the optical surface of each optical component according to the first example.

The surface numbers for the aspherical surfaces are emphasized with asterisks (*) in FIG. 2, and the aspherical coefficients of such aspherical surfaces are depicted in FIG. 3.

In the first embodiment, the values for Formula (1) to Formula (9) are as follows, which satisfies each of Formula (1) to Formula (9).

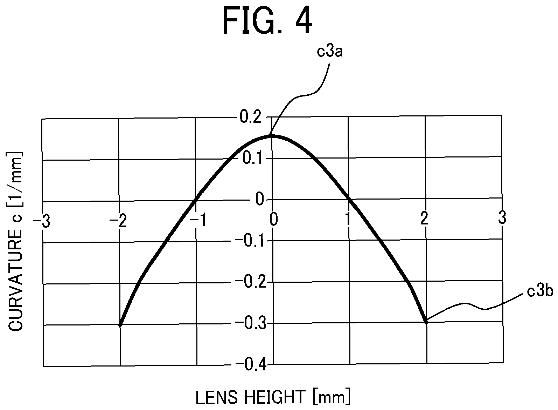

Note that c3b is a value corresponding to the outermost end of the effective diameter of 2.0 mm. FIG. 4 presents a transition of curvature from the axial position to the off-axis position on the object-side surface of the third lens L3 in the graph.

    c3a: 0.154
    c3b: -0.302
    $\varphi$A: 0.233
    d2: 3.228
    d3: 1.422
    $\alpha$3: $70 \times 10^{-6}$
    $\beta$3: $-104 \times 10^{-6}$

FIG. 8 is a cross-sectional view of an imaging optical system according to the second example of an embodiment of the present disclosure. As illustrated in FIG. 8, the imaging optical system according to the second example of an embodiment consists of, sequentially from the object side toward the image-plane side, a first lens group G1, an aperture stop S, and a second lens group G2. The first lens group G1 consists of, sequentially from the object side toward the image-plane side, a lens L1 and a lens L2, and the second lens group G2 consists of, sequentially from the object side toward the image-plane side, a lens L3, a lens L4, and a lens L5.

More specifically, the lens L1 has a meniscus shape with a convex surface facing the object side, having negative power. The lens L2 has a meniscus shape with a concave surface facing the object side, having positive power. The lens L3 has a biconvex shape having positive power. The lens L4 has a biconcave shape having negative power, and the lens L5 has a biconvex shape having positive power.

Further, the object-side surface of the lens L3 adjacent to the aperture stop S has positive power on the axial position and negative power at the off-axis position.

In the second example, the lens L1 is a glass lens, and the lens L2 is a glass lens. The lens L3 is a plastic lens, and the lens L4 is a plastic lens. The lens L5 is a glass lens.

In the embodiments of the present disclosure, a first lens corresponds to the lens L1, and a second lens corresponds to the lens L2. Further, the third lens corresponds to the lens L3, and a fourth lens corresponds to the lens L4.

In the second example, the focal length f of the optical system as a whole is 4.29 (mm), and the open F-number Fno is 1.90. The half angle of view θ is 29.2 degrees, and the maximum image height Y is 2.4 (mm).

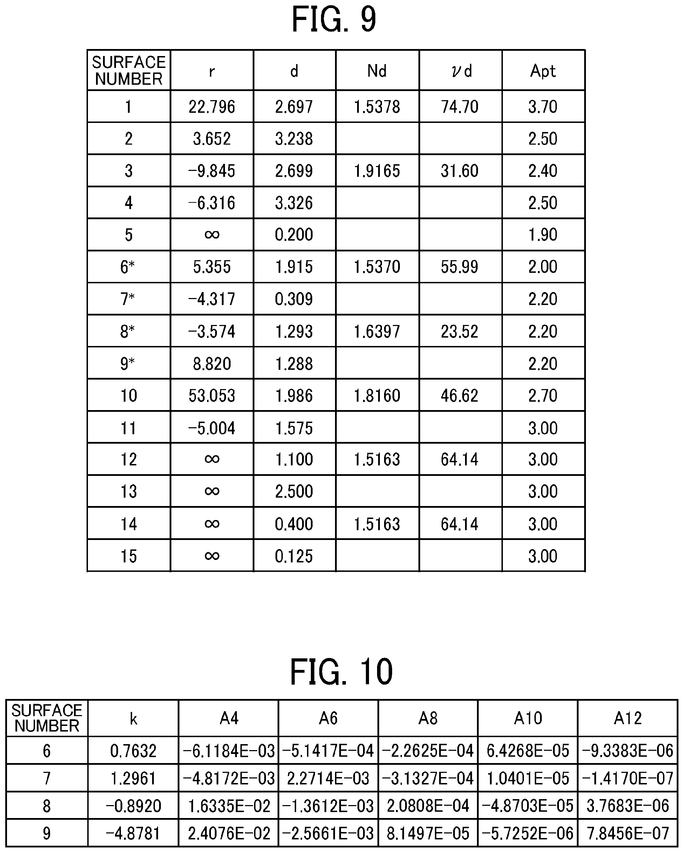

The table in FIG. 9 lists data for the surface distance d of adjacent optical surfaces, the refractive index Nd, the Abbe number vd, and the optical effective diameter Apt of the optical surface of each optical component according to the second example.

The surface numbers for the aspherical surfaces are emphasized with asterisks (*) in FIG. 9, and the aspherical coefficients of such aspherical surfaces are depicted in FIG. 10.

In the second embodiment, the values for Formula (1) to Formula (9) are as follows, which satisfies each of Formula (1) to Formula (9).

Note that c3b is a value corresponding to the outermost end of the effective diameter of 2.0 mm.

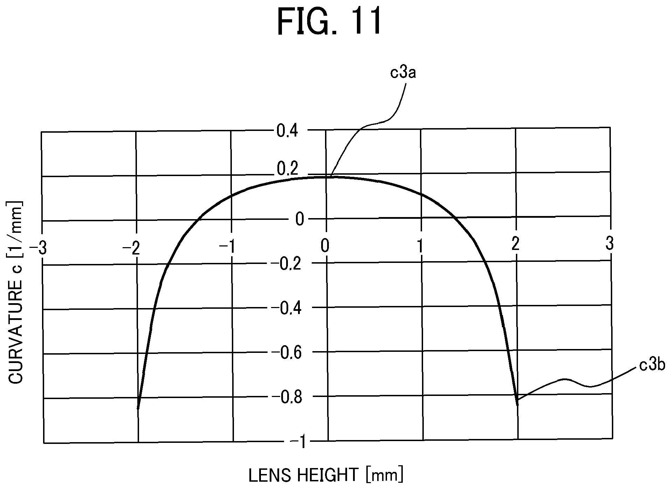

FIG. 11 presents a transition of curvature from the axial position to the off-axis position on the object-side surface of the third lens L3 in the graph.

    c3a: 0.187
    c3b: -0.848
    $\varphi$A: 0.233
    d2: 3.326
    d3: 0.200
    $\alpha$3: $59 \times 10^{-6}$
    $\beta$3: $-95 \times 10^{-6}$

FIG. 15 is a cross-sectional view of an imaging optical system according to the third example of an embodiment of the present disclosure. As illustrated in FIG. 15, the imaging optical system according to the third example of an embodiment consists of, sequentially from the object side toward the image-plane side, a first lens group G1, an aperture stop S, and a second lens group G2. The first lens group G1 consists of, sequentially from the object side toward the image-plane side, a lens L1 and a lens L2, and the second lens group G2 consists of, sequentially from the object side toward the image-plane side, a lens L3, a lens L4, and a lens L5.

More specifically, the lens L1 has a meniscus shape with a convex surface facing the object side, having negative power. The lens L2 has a meniscus shape with a concave surface facing the object side, having positive power. The lens L3 has a meniscus shape with a convex surface facing the object side, having negative power. The lens L4 has a biconvex shape having positive power, and the lens L5 has a meniscus shape with a concave surface facing the object side, having positive power.

Further, the object-side surface of the lens L3 adjacent to the aperture stop S has positive power at the axial position and negative power at the off-axis position.

In the third example, the lens L1 is a glass lens, and the lens L2 is a plastic lens. The lens L3 is a plastic lens, and the lens L4 is a glass lens. The lens L5 is a plastic lens. In the embodiments of the present disclosure, a first lens corresponds to the lens L1, and a second lens corresponds to the lens L2. Further, the third lens corresponds to the lens L3, and a fourth lens corresponds to the lens L4.

In the third example, the focal length f of the optical system as a whole is 4.29 (mm), and the open F-number Fno is 1.90. The half angle of view θ is 29.2 degrees, and the maximum image height Y is 2.4 (mm).

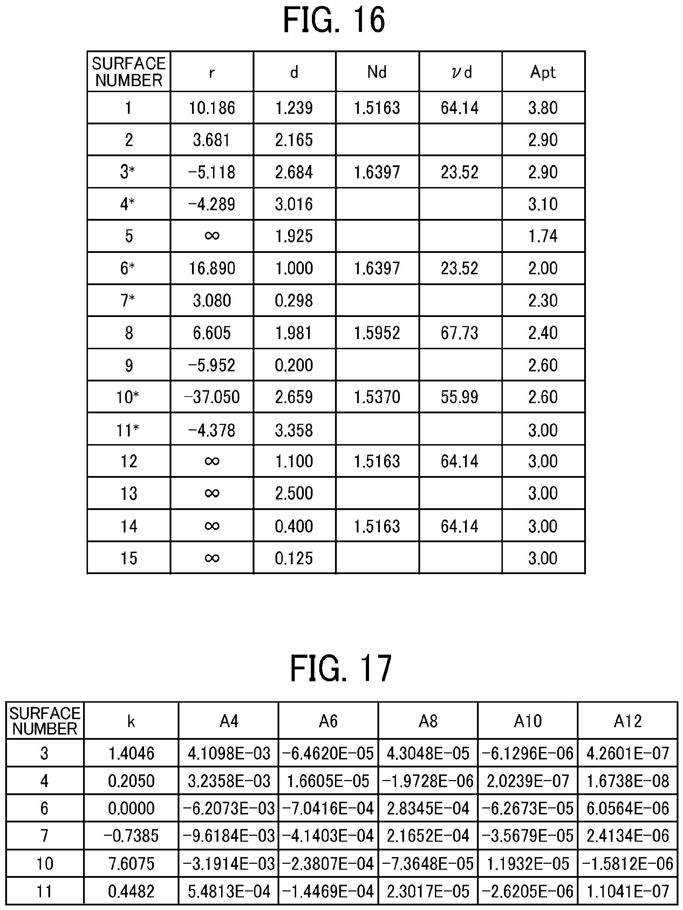

The table in FIG. 16 lists data for the surface distance d of adjacent optical surfaces, the refractive index Nd, the Abbe number vd, and the optical effective diameter Apt of the optical surface of each optical component according to the third example.

The surface numbers for the aspherical surfaces are emphasized with asterisks (*) in FIG. 16, and the aspherical coefficients of such aspherical surfaces are depicted in FIG. 17.

In the third embodiment, the values for Formula (1) to Formula (9) are as follows, which satisfies each of Formula (1) to Formula (9).

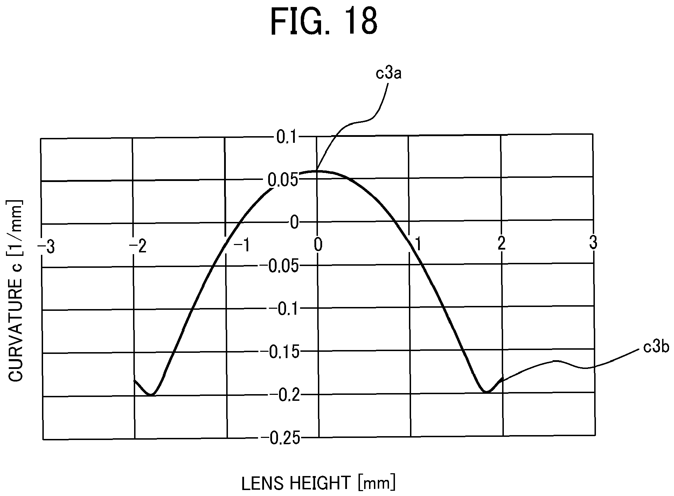

Note that c3b is a value corresponding to the outermost end of the effective diameter of 2.0 mm. FIG. 18 presents a transition of curvature from the axial position to the off-axis position on the object-side surface of the third lens L3 in the graph.

c3a: 0.059
c3b: -0.182
φA: 0.233
d2: 3.016
d3: 1.925
α3: 70 × 10^-6
β3: -104 × 10^-6

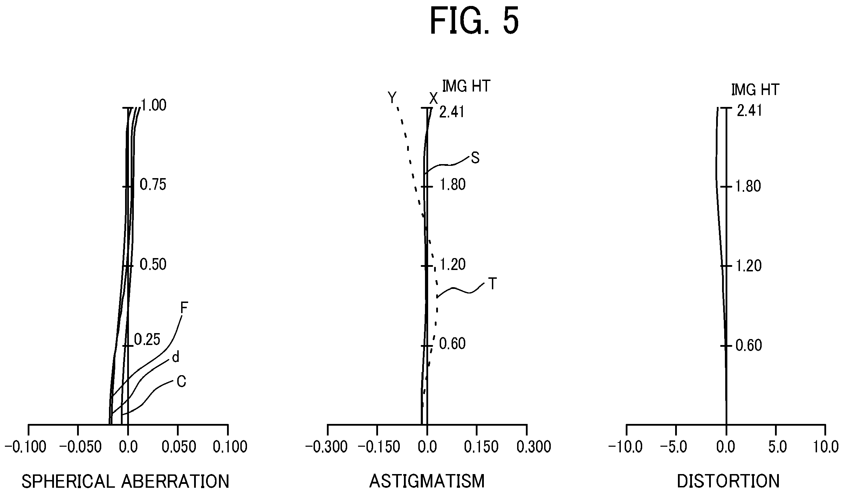

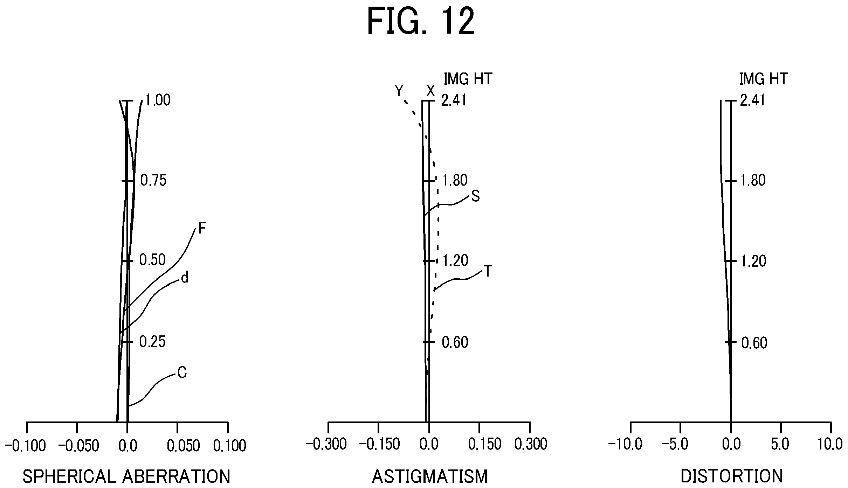

FIG. 5 is a collection of a spherical aberration diagram, an astigmatism diagram, and a distortion diagram of the imaging optical system focused at infinity, according to the first example. FIG. 12 is a collection of a spherical aberration diagram, an astigmatism diagram, and a distortion diagram of the imaging optical system focused at infinity, according to the second example. FIG.

19 is a collection of a spherical aberration diagram, an astigmatism diagram, and a distortion diagram of the imaging optical system focused at infinity, according to the third example.

In each aberration diagram, d indicates the aberration with respect to the d-line (λ = 587.6 nm), C indicates the aberration with respect to the C-line (λ = 656.3 nm), and F indicates the aberration with respect to the F-line (λ = 486.1 nm). The solid line indicates sagittal aberration, and the broken line indicates meridional aberration.

The aberrations in the first example to the third example are corrected to achieve intended performance of the imaging optical system.

It is apparent from the first example to the third example that the imaging optical system according to an embodiment has a compact configuration including about five lenses while having a wide angle of view such that its half angle of view is about 29 degrees and a large diameter of aperture of about F2.0 or less, for example, and achieves very high imaging performance including a low distortion of less than about ±1%.

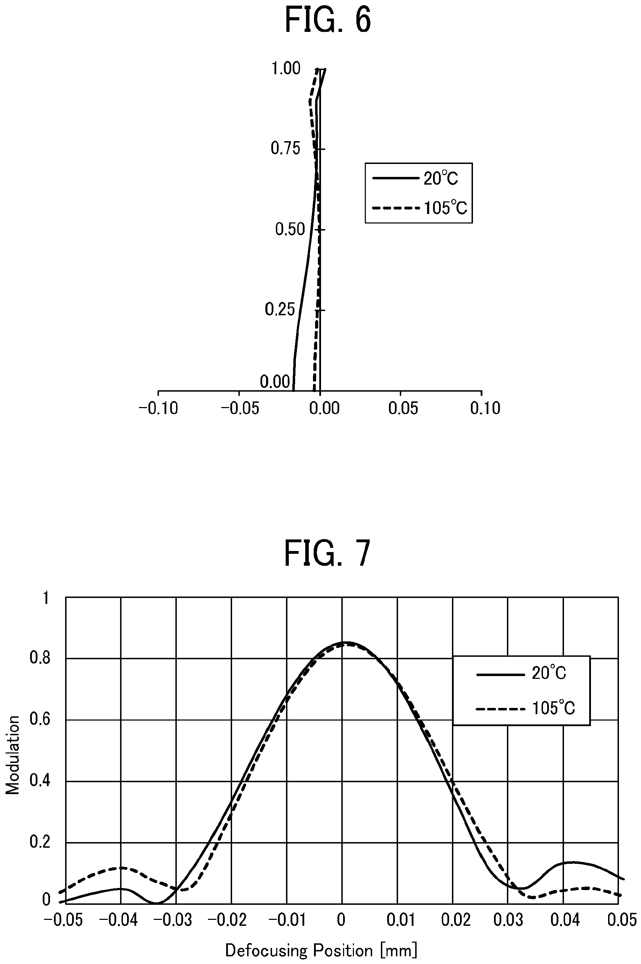

FIGs. 6, 13 and 20 are spherical aberration diagrams at a room temperature of 20°C and at a high temperature of 105°C in the imaging optical systems according to the first to third examples, respectively.

The horizontal axis denotes a defocusing direction (i.e., the direction of the optical axis) where the sensor surface is 0, and the vertical axis denotes the pupil coordinates representing a ratio when the pupil diameter is 1.

In the first example, a variation in the focusing point (i.e., focal point) of the axial rays is +13.0 μm, and a variation in the focusing point of the off-axis rays is -4.7 μm with a temperature change. In the second example, a variation in the focusing point (i.e., focal point) of the axial rays is +7.0 μm, and a variation in the focusing point of the off-axis rays is -1.4 μm with a temperature change. In the third example, a variation in the focusing point (i.e., focal point) of the axial rays is +14.9 μm, and a variation in the focusing point of the off-axis rays is -10.3 μm with a temperature change. It has been found that in any of the first example to the third example, the focal point is shifted in the positive direction while the spherical aberration significantly varies in a direction to be under-corrected.

When a temperature decreases to be a low temperature, the focal point is shifted in the negative direction opposite to the direction of a high temperature while the spherical aberration significantly varies in a direction to be over-corrected.

FIGs. 7, 14 and 21 are diagrams with MTF curves presenting variations in central image height at a room temperature of 20°C and at a high temperature of 105°C in the imaging optical systems according to the first to third examples, respectively.

The horizontal axis denotes a defocusing direction (i.e., the direction of the optical axis) where the sensor surface is 0, and the vertical axis denotes a MTF that represents an index of the height corresponding to a resolution.

With a temperature change, a variation in MTF peak is +1 μm in the first example, -1 μm in the second example, and +2 μm in the third example. It has been found that in any of the first example to the third example, a variation in MTF peak can be reduced to less than about several μm at very high temperatures.

When a temperature decreases to be a low temperature, the MTF peak is shifted similarly to the case in the high temperatures.

In this case, it is presupposed to use a lens cell of aluminum having a holding structure to simply stack the lenses from the lens L1 toward the image plane.

In the first example to the third example, filter glasses are disposed between the second lens group G2 and the image plane IMG (i.e., in the rear of the second lens group G2 or at the image-plane side of the second lens group G2). The filter glasses represent various filters, such as an optical low-pass filter, an infrared-cut filter, and an ultraviolet-cut filter; and a cover glass (seal glass) for a photosensor, as optically equivalent parallel plates.

In an imaging optical system of a type using a solid-state image sensor, such as a charge-coupled device (CCD) sensor or a complementary metal-oxide semiconductor (CMOS) sensor, at least one of a back insertion glass, a low-pass filter, a cut filter, a cover glass that protects a photo-sensing surface of the solid-state image sensor, is inserted. In the examples of the present disclosure, filter glasses F1 and F2 are inserted between the second lens group G2 and the image plane IMG as two parallel plates among the above-listed components. However, insertion or non-insertion of an optical filter and the number of inserted optical filters are not limited to those of the example.

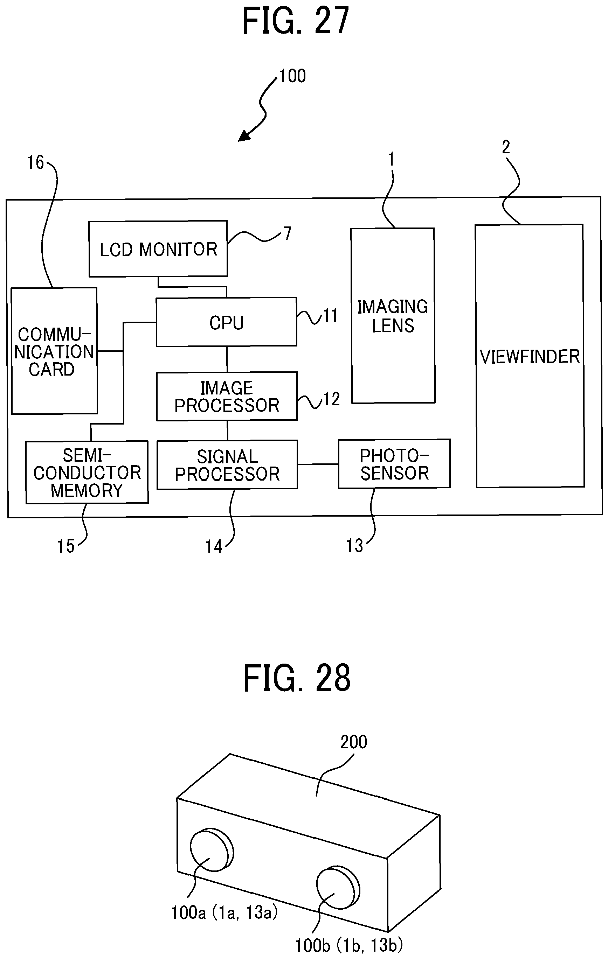

Next, a digital camera as a camera apparatus incorporating the imaging optical system according to at least one embodiment of the present disclosure is described according to an embodiment, referring to FIGs. 26A, 26B, and 27.

FIG. 26A is a perspective view of the appearance of a digital camera 100 as viewed from the object side (i.e., the front side) that is the subject side.

FIG. 26B is a perspective view of the appearance of the digital camera 100 as viewed from the rear side that is the image-capturing side.

FIG. 27 is a block diagram of a functional configuration of the digital camera 100.

A camera apparatus is described using an example of a digital camera; however, a silver-salt film camera using a silver-salt film as an existing image recording medium may employ the imaging optical system according to at least one embodiment of the present disclosure. The imaging optical system according to at least one embodiment is suitable to a camera apparatus, such as an on-vehicle camera apparatus or a monitoring camera apparatus, which is requested to have high resolution, low distortion, a wide angle of view, and a large diameter of aperture.

Also, portable information terminal apparatuses, such as a so-called personal data assistant (PDA) and a mobile phone, and further various information apparatuses including mobile terminal apparatuses, such as a smart phone and a tablet terminal, including the functions of the mobile information terminal apparatuses and incorporating a camera function are widely used.

Such an information apparatus includes a function and a configuration substantially similar to those of a digital camera although the appearance is different. The imaging optical system according to at least one embodiment may be employed as an imaging optical system in such an information apparatus.

As illustrated in FIG. 26A and FIG. 26B, the digital camera 100 according to an embodiment includes a housing (a camera body) 5, and an imaging lens (imaging optical system) 1, an optical viewfinder 2, a strobe (flashlight) 3, a shutter button 4, a power switch 6, a liquid crystal monitor 7, an operation key 8, and a memory card slot 9 on the housing 5.

As illustrated in FIG. 27, the digital camera 100 further includes a central processing unit (CPU) 11, an image processor 12, a photosensor 13, a signal processor 14, a semiconductor memory 15, and a communication card 16.

The digital camera 100 includes the imaging lens 1 as an imaging optical system and a photosensor 13 as an image sensor, such as a CMOS or a CCD, that reads an optical image of a subject formed by the imaging lens 1.

As the imaging lens 1, the imaging optical system according to at least one embodiment described above may be used. The CPU 11 controls the signal processor 14 to convert the output of the photosensor 13 into digital image information.

The digital image data digitalized by the signal processor 14 is then subjected to a predetermined image processing by the image processor 12 under control of the CPU 11, and is recorded in the semiconductor memory 15, such as a nonvolatile memory.

In such a configuration, the semiconductor memory 15 may be a memory card installed in the memory card slot 9 or an on-board semiconductor memory incorporated in the body of the digital camera. The liquid crystal display 7 can display an image being captured or an image recorded in the semiconductor memory 15.

The images that are recorded in the semiconductor memory 15 may be sent to an external device through, for example, the communication card 16 inserted into a communication card slot that may serve as the memory card slot 9.

The objective surface of the imaging lens 1 is covered by a lens barrier while the camera is being carried. Once a user manipulates the power switch 6 to turn on the power supply, the lens barrier open to expose the objective surface. To display the image recorded in the semiconductor memory 15 onto the liquid crystal monitor 7, or send the image to an external device via the communication card 16, the operation key 8 is operated in accordance with a predetermined procedure. For example, the semiconductor memory 15 and the communication card 16 are used upon being installed in a dedicated slot such as a memory card slot 9 or a general-purpose slot such as a communication card slot.

As described above, the imaging lens 1 composed of the imaging optical system according to an embodiment is applicable in the camera apparatus or the on-vehicle camera.

Thus, the camera apparatus sufficiently having a wide angle of view and a large diameter of aperture, holding low distortion, and having proper performance against environments can be provided. Moreover, since a captured image is converted into digital image information and is output, the configuration can be further suitable to a sensing technology such as image analysis or image processing.

Next, a stereo camera incorporating the imaging optical system according to at least one embodiment of the present disclosure is described below according to an embodiment, referring to FIG. 28.

FIG. 28 is a perspective view of the appearance of the stereo camera as viewed from the object side, that is, the front side, which is the subject side. As illustrated in FIG. 28, the stereo camera 200 includes two camera apparatuses 100a and 100b. The camera apparatuses 100a and 100b respectively incorporate imaging lenses 1a and 1b each corresponding to the imaging optical system according to an embodiment, and photosensors 13a and 13b.

The camera apparatuses 100a and 100b may have, for example, a configuration similar to that of the digital camera (the camera apparatus) 100 illustrated in FIGs. 26A, 26B, and 27; however, the camera apparatuses 100a and 100b are not limited thereby. Digital image information output from the camera apparatuses 100a and 100b is subjected to correction or image processing using, for example, an image processor provided in the stereo camera 200 and output. Thus, the processed information can be used for a sensing technology such as a manufacturing line or control on a vehicle.

The above-described stereo camera incorporating the imaging lens 1 that is the imaging optical system according to any one of the first example to the third example enables a reduction in size and a wide angle of view (e.g., a half angle of view of approximately 30 degrees), and also maintains a low distortion of approximately 1%, thus achieving intended imaging performance.

Such a stereo camera also achieves successful performance with environmental resistance. Moreover, since a captured image is converted into digital image information and is output, the configuration be further suitable to a sensing technology such as image analysis or image processing.

Although the desirable embodiments and examples of the disclosure have been described above, the disclosure is not particularly limited to such specific embodiments and examples unless otherwise particularly limited in the above description, and various modifications and changes can be made without departing from the spirit and scope of the disclosure as set forth in the appended claims. For example, the imaging optical system according to an embodiment can be used as a projection optical system where the "image side" in the above description is changed to an object side and the "object side" in the above description is changed to an image side.

Numerous additional modifications and variations are possible in light of the above teachings. It is therefore to be understood that, within the scope of the above teachings, the present disclosure may be practiced otherwise than as specifically described herein. With some embodiments having thus been described, it will be obvious that the same may be varied in many ways. Such variations are not to be regarded as a departure from the scope of the present disclosure and appended claims, and all such modifications are intended to be included within the scope of the present disclosure and appended claims.

**Claims**

1. An imaging optical system (1) consisting of:

   an aperture stop (S);
   a first lens group (G1) closer to an object than the aperture stop (S); and
   a second lens group (G2) closer to an image than the aperture stop (S),
   the first lens group (G1) consisting of:

      a first lens (L1) having a meniscus shape with negative power; and
      a second lens (L2) having a meniscus shape with positive power,
      the second lens group (G2) including a third lens (L3) made of plastic and adjacent to the aperture stop (S),
      the third lens (L3) having a surface that satisfies a formula below:

$$|c3a - c3b|/|c3a| > 1$$

   where

      c3a denotes a local curvature near an optical axis,
      c3b denotes a local curvature at a height of an outermost end of an effective diameter of the third lens (L3).

2. The imaging optical system (1) according to claim 1, wherein the third lens (L3) satisfies a formula below:

$$\alpha 3 > 30 \times 10^{-6}$$

where
$\alpha 3$ denotes a coefficient of linear expansion of the third lens (L3).

3. The imaging optical system (1) according to claim 1 or 2, wherein the third lens (L3) satisfies a formula below:

$$\beta 3 < -50 \times 10^{-6}$$

where
$\beta 3$ denotes a temperature coefficient of refractive index of the third lens (L3), and the temperature coefficient of refractive index is a value of temperature coefficient of refractive index with respect to the d-line in air at temperatures of 20°C to 40°C.

4. The imaging optical system (1) according to any one of claims 1 to 3, wherein the surface of the third lens (L3) satisfies a formula below.

5. The imaging optical system (1) according to claim 4, wherein the surface of the third lens (L3) has positive power near the optical axis and negative power at the height of the outermost end of the effective diameter of the third lens (L3).

6. The imaging optical system (1) according to claim 4 or 5,
wherein the surface of the third lens (L3) satisfies a formula below.

$$|c3a| < |c3b|$$

7. The imaging optical system (1) according to any one of claims 1 to 6, wherein the surface of the third lens (L3) is closest to the aperture stop (S) among surfaces of the third lens (L3).

8. The imaging optical system (1) according to any one of claims 1 to 7, wherein a formula below is satisfied:

$$d2 > d3$$

where
d2 denotes a distance between the second lens (L2)

and the aperture stop (S), d3 denotes a distance between the third lens (L3) and the aperture stop (S).

9. The imaging optical system (1) according to any one of claims 1 to 8, wherein a formula below is satisfied:

$$|c3a/\varphi A| < 1$$

where
$\varphi A$ denotes power of the imaging optical system (1) as a whole.

10. The imaging optical system (1) according to any one of claims 1 to 9, wherein the first lens (L1) is made of glass.

11. The imaging optical system (1) according to any one of claims 1 to 10, wherein the second lens (L2) further includes a fourth lens (L4) made of plastic.

12. The imaging optical system (1) according to claim 11, wherein the third lens (L3) and the fourth lens (L4) are fit into each other at portions outside effective diameters of the third lens (L3) and the fourth lens (L4).

13. A camera apparatus (100) comprising the imaging optical system (1) according to any one of claims 1 to 12.

14. A stereo camera (200) comprising the imaging optical system (1) according to any one of claims 1 to 12.

FIG. 1

# FIG. 2

| SURFACE NUMBER | r | d | Nd | $\nu$d | Apt |
|---|---|---|---|---|---|
| 1 | 16.195 | 1.000 | 1.6935 | 53.20 | 3.40 |
| 2 | 3.977 | 2.900 | | | 2.70 |
| 3 | −13.095 | 2.698 | 1.9037 | 31.34 | 2.60 |
| 4 | −6.533 | 3.228 | | | 2.60 |
| 5 | ∞ | 1.422 | | | 1.84 |
| 6* | 6.496 | 1.669 | 1.6397 | 23.52 | 2.00 |
| 7* | 2.018 | 0.233 | | | 2.50 |
| 8* | 3.502 | 2.687 | 1.5370 | 55.99 | 2.60 |
| 9* | −8.806 | 0.226 | | | 2.70 |
| 10 | 11.310 | 1.818 | 1.6516 | 58.55 | 2.90 |
| 11 | −9.440 | 2.646 | | | 2.90 |
| 12 | ∞ | 1.100 | 1.5163 | 64.14 | 3.00 |
| 13 | ∞ | 2.500 | | | 3.00 |
| 14 | ∞ | 0.400 | 1.5163 | 64.14 | 3.00 |
| 15 | ∞ | 0.125 | | | 3.00 |

# FIG. 3

| SURFACE NUMBER | k | A4 | A6 | A8 | A10 | A12 |
|---|---|---|---|---|---|---|
| 6 | 0.2656 | −1.6442E−02 | 1.5808E−03 | −2.1498E−04 | 2.4150E−05 | −1.8056E−06 |
| 7 | −3.1710 | −9.9425E−03 | 1.4240E−03 | −2.0472E−04 | 2.6666E−05 | −2.0253E−06 |
| 8 | −4.7286 | −2.2980E−03 | 9.2090E−04 | 3.5907E−05 | −1.1670E−05 | 4.6367E−07 |
| 9 | 8.4920 | 5.2003E−03 | −2.5026E−04 | 2.3621E−04 | −3.1548E−05 | 2.5371E−06 |

## FIG. 4

# FIG. 5

SPHERICAL ABERRATION

ASTIGMATISM

DISTORTION

# FIG. 6

# FIG. 7

# FIG. 8

# FIG. 9

| SURFACE NUMBER | r | d | Nd | νd | Apt |
|---|---|---|---|---|---|
| 1 | 22.796 | 2.697 | 1.5378 | 74.70 | 3.70 |
| 2 | 3.652 | 3.238 | | | 2.50 |
| 3 | −9.845 | 2.699 | 1.9165 | 31.60 | 2.40 |
| 4 | −6.316 | 3.326 | | | 2.50 |
| 5 | ∞ | 0.200 | | | 1.90 |
| 6* | 5.355 | 1.915 | 1.5370 | 55.99 | 2.00 |
| 7* | −4.317 | 0.309 | | | 2.20 |
| 8* | −3.574 | 1.293 | 1.6397 | 23.52 | 2.20 |
| 9* | 8.820 | 1.288 | | | 2.20 |
| 10 | 53.053 | 1.986 | 1.8160 | 46.62 | 2.70 |
| 11 | −5.004 | 1.575 | | | 3.00 |
| 12 | ∞ | 1.100 | 1.5163 | 64.14 | 3.00 |
| 13 | ∞ | 2.500 | | | 3.00 |
| 14 | ∞ | 0.400 | 1.5163 | 64.14 | 3.00 |
| 15 | ∞ | 0.125 | | | 3.00 |

# FIG. 10

| SURFACE NUMBER | k | A4 | A6 | A8 | A10 | A12 |
|---|---|---|---|---|---|---|
| 6 | 0.7632 | −6.1184E−03 | −5.1417E−04 | −2.2625E−04 | 6.4268E−05 | −9.3383E−06 |
| 7 | 1.2961 | −4.8172E−03 | 2.2714E−03 | −3.1327E−04 | 1.0401E−05 | −1.4170E−07 |
| 8 | −0.8920 | 1.6335E−02 | −1.3612E−03 | 2.0808E−04 | −4.8703E−05 | 3.7683E−06 |
| 9 | −4.8781 | 2.4076E−02 | −2.5661E−03 | 8.1497E−05 | −5.7252E−06 | 7.8456E−07 |

# FIG. 11

# FIG. 12

SPHERICAL ABERRATION

1.00
0.75
F
0.50
d
0.25
C
-0.100  -0.050  0.0  0.050  0.100

ASTIGMATISM

Y  X  IMG HT
2.41
1.80
S
1.20
T
0.60
-0.300  -0.150  0.0  0.150  0.300

DISTORTION

IMG HT
2.41
1.80
1.20
0.60
-10.0  -5.0  0.0  5.0  10.0

EP 3 876 015 A1

# FIG. 13

# FIG. 14

Defocusing Position [mm]

FIG. 15

## FIG. 16

| SURFACE NUMBER | r | d | Nd | νd | Apt |
|---|---|---|---|---|---|
| 1 | 10.186 | 1.239 | 1.5163 | 64.14 | 3.80 |
| 2 | 3.681 | 2.165 | | | 2.90 |
| 3* | −5.118 | 2.684 | 1.6397 | 23.52 | 2.90 |
| 4* | −4.289 | 3.016 | | | 3.10 |
| 5 | ∞ | 1.925 | | | 1.74 |
| 6* | 16.890 | 1.000 | 1.6397 | 23.52 | 2.00 |
| 7* | 3.080 | 0.298 | | | 2.30 |
| 8 | 6.605 | 1.981 | 1.5952 | 67.73 | 2.40 |
| 9 | −5.952 | 0.200 | | | 2.60 |
| 10* | −37.050 | 2.659 | 1.5370 | 55.99 | 2.60 |
| 11* | −4.378 | 3.358 | | | 3.00 |
| 12 | ∞ | 1.100 | 1.5163 | 64.14 | 3.00 |
| 13 | ∞ | 2.500 | | | 3.00 |
| 14 | ∞ | 0.400 | 1.5163 | 64.14 | 3.00 |
| 15 | ∞ | 0.125 | | | 3.00 |

## FIG. 17

| SURFACE NUMBER | k | A4 | A6 | A8 | A10 | A12 |
|---|---|---|---|---|---|---|
| 3 | 1.4046 | 4.1098E−03 | −6.4620E−05 | 4.3048E−05 | −6.1296E−06 | 4.2601E−07 |
| 4 | 0.2050 | 3.2358E−03 | 1.6605E−05 | −1.9728E−06 | 2.0239E−07 | 1.6738E−08 |
| 6 | 0.0000 | −6.2073E−03 | −7.0416E−04 | 2.8345E−04 | −6.2673E−05 | 6.0564E−06 |
| 7 | −0.7385 | −9.6184E−03 | −4.1403E−04 | 2.1652E−04 | −3.5679E−05 | 2.4134E−06 |
| 10 | 7.6075 | −3.1914E−03 | −2.3807E−04 | −7.3648E−05 | 1.1932E−05 | −1.5812E−06 |
| 11 | 0.4482 | 5.4813E−04 | −1.4469E−04 | 2.3017E−05 | −2.6205E−06 | 1.1041E−07 |

# FIG. 18

LENS HEIGHT [mm]

# FIG. 19

SPHERICAL ABERRATION

ASTIGMATISM

DISTORTION

EP 3 876 015 A1

# FIG. 20

# FIG. 21

Defocusing Position [mm]

# FIG. 22A

CURVATURE c [mm]

c3a

|c3a|

0

|c3a-c3b|

c3b

LENS HEIGHT [mm]

# FIG. 22B

CURVATURE c [mm]

c3a

|c3a|

0

|c3a-c3b|

c3b

LENS HEIGHT [mm]

# FIG. 22C

CURVATURE c [mm]

c3b

|c3a-c3b|

|c3a|

0

c3a

LENS HEIGHT [mm]

# FIG. 22D

c3b

CURVATURE c [mm]

|c3a-c3b|

|c3a|

0

c3a

LENS HEIGHT [mm]

# FIG. 23A

PRINCIPAL PLANE

MARGINAL RAYS

SENSOR SURFACE

FOCAL POINT

PARAXIAL RAYS

SPHERICAL ABERRATION

MTF PEAK

# FIG. 23B

PRINCIPAL PLANE

MARGINAL RAYS

SENSOR SURFACE

FOCAL POINT

PARAXIAL RAYS

SPHERICAL ABERRATION

MTF PEAK

EP 3 876 015 A1

# FIG. 23C

PRINCIPAL
PLANE

MARGINAL RAYS

SENSOR
SURFACE

FOCAL POINT

PARAXIAL RAYS

SPHERICAL
ABERRATION

MTF PEAK

# FIG. 24A

SPHERICAL
ABERRATION

| AT ROOM TEMPERATURE |
| AT CHANGES IN TEMPERATURE |

CHANGE
IN FOCAL
POINT

CHANGE
IN FOCAL
POINT

MTF PEAK

# FIG. 24B

SPHERICAL
ABERRATION

CHANGE
IN FOCAL
POINT

CHANGE
IN FOCAL
POINT

MTF PEAK

# FIG. 25

STRUCTURE IN WHICH LENSES
ARE FIT AND HELD TOGETHER

# FIG. 26A

# FIG. 26B

# FIG. 27

100

16

| | LCD MONITOR | 7 |

| COMMU-NICATION CARD | CPU | 11 | IMAGING LENS | 1 | VIEWFINDER | 2 |

| | IMAGE PROCESSOR | 12 |

| SEMI-CONDUCTOR MEMORY | SIGNAL PROCESSOR | PHOTO-SENSOR |

15   14   13

# FIG. 28

200

100a (1a, 13a)

100b (1b, 13b)

Europäisches
Patentamt

European
Patent Office

Office européen
des brevets

# EUROPEAN SEARCH REPORT

Application Number

EP 21 15 0877

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 3 764 146 A1 (RICOH CO LTD [JP]) 13 January 2021 (2021-01-13) * figures 1-3; example 1 * | 1-10,13, 14 | INV. G02B7/02 G02B9/60 G02B13/04 G02B13/18 |
| A | CN 205 485 028 U (ZHEJIANG SUNNY OPTICS CO LTD) 17 August 2016 (2016-08-17) * example 2 * | 1-14 | |
| A | KASAROVA S N ET AL: "Temperature dependence of refractive characteristics of optical plastics", JOURNAL OF PHYSICS: CONFERENCE SERIES, INSTITUTE OF PHYSICS PUBLISHING, BRISTOL, GB, vol. 253, no. 1, 7 December 2010 (2010-12-07), page 12028, XP020200641, ISSN: 1742-6596, DOI: 10.1088/1742-6596/253/1/012028 * the whole document * | 1-14 | |
| A | US 2019/004294 A1 (BABA TOMOHIKO [JP]) 3 January 2019 (2019-01-03) * figure 8; example 2 * | 1-14 | TECHNICAL FIELDS SEARCHED (IPC) G02B |
| A,D | JP 2018 097150 A (KONICA MINOLTA INC) 21 June 2018 (2018-06-21) * example 1 * | 1-14 | |

The present search report has been drawn up for all claims

| Place of search | Date of completion of the search | Examiner |
|---|---|---|
| Munich | 8 June 2021 | Muller, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 15 0877

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2021

| Patent document cited in search report | | Publication date | Patent family member(s) | | Publication date |
|---|---|---|---|---|---|
| EP 3764146 | A1 | 13-01-2021 | EP | 3764146 A1 | 13-01-2021 |
| | | | JP | 2021012311 A | 04-02-2021 |
| | | | US | 2021011249 A1 | 14-01-2021 |
| CN 205485028 | U | 17-08-2016 | NONE | | |
| US 2019004294 | A1 | 03-01-2019 | CN | 107924043 A | 17-04-2018 |
| | | | JP | 2017040743 A | 23-02-2017 |
| | | | US | 2019004294 A1 | 03-01-2019 |
| | | | WO | 2017029901 A1 | 23-02-2017 |
| JP 2018097150 | A | 21-06-2018 | JP | 6721865 B2 | 15-07-2020 |
| | | | JP | 2018097150 A | 21-06-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014089349 A
- JP 2018097150 A

- JP 2018124358 A